# EUROPEAN PATENT APPLICATION

(11) **EP 4 011 772 A1**
(43) Date of publication of application: **15.06.2022**
(21) Application number: 20852433.0
(22) Date of filing: 09.08.2020
(51) Int. Cl.: B64C 37/00, B64C 27/28, B64C 19/02

(54) **CONVERTIPLANE**

(30) Priority: 09.08.2019 RU 2019125349
(71) Applicant: Sabadash, Andrew Andreevich, Respublika Tatarstan, g. Kazan, 420133 (RU); Milevsky, Alexander Vladimirovich, G. Novosibirsk, 630097 (RU)
(72) Inventor: Sabadash, Andrew Andreevich, Respublika Tatarstan, g. Kazan, 420133 (RU); Milevsky, Alexander Vladimirovich, G. Novosibirsk, 630097 (RU)
(74) Representative: Chimini, Francesco
(86) International application number: PCT/RU2020/050182
(87) International publication number: WO 2021/029790

(57) **Abstract**

The invention relates to the field of aeronautical engineering, specifically to convertiplanes. A convertiplane comprises a fuselage, a control system, aerodynamic outer wings with aerodynamic control surfaces, an all-moving foreplane with aerodynamic control surfaces, a tail plane, and propulsion systems with propellers. The propulsion systems with propellers are arranged rotatably on tips of the foreplane and on the tail plane. The convertiplane is designed to permit the aerodynamic centre of pressure and the resultant thrust vector to coincide. The convertiplane is designed to permit the mutual dynamic and static scalar control thereof by operating the aerodynamic control surfaces and thrust vectoring of each of the propulsion systems. The propulsion systems arranged on the tips of the foreplane are capable of counterrotation of the propeller and are capable of dynamically displacing the centre of pressure and are also capable of displacing the axis of rotation of the front propulsion systems in the ZX plane. The propulsion systems have an axial degree of freedom, and are also capable of independently of one another controlling thrust vectoring and revolutions by controlling the pitch angle of the blades and the diameter thereof.

## Description

The invention relates to the field of aircraft engineering, namely convertiplanes.

### Background of the technology and prerequisites for the invention

To date, the classical aircraft, airplane, helicopter, multi-rotor vehicles of different variations, aero hybrids and rotorcraft are widely used.

Each of the schemes has its advantages and disadvantages, and each scheme is suitable for specific tasks. Nevertheless, there are a number of tasks that classical schemes cannot cope with, or do not cope effectively.

In the context of modern requirements to drones, the disadvantages of classical schemes often outweigh the advantages, which significantly reduces reliability and, consequently, safety, and also leads to an increase in the cost of UAVs in general. This not only inhibits the development of the drone industry, but also creates a preconceived notion of the difficulty of operating unmanned technologies, as well as generates justified restrictions in the legislative sphere on the part of the regulatory authorities.

The most in-demand solution is a versatile aircraft, such as a convertiplane, whose effective versions are still not on the market, and attempts to combine the classic schemes have so far not led to tangible results.

The declared scheme is the most effective scheme of the aircraft convertiplane, which is superior to all existing similar solutions to date.

### Disadvantages of aircraft schemes.

Aircraft: functionally unable to hover in place, perform steady vertical takeoff and landing. Susceptible to external factors: turbulence, wind speed, changes in control efficiency by speed of incoming flow. Difficult and, most importantly, expensive to fully automate maintenance to create an autonomous solution. The need for a runway to make a successful landing.

Helicopter: high cost of applicability due to the need to manufacture and maintain the control mechanics, automatic tilt mechanism, transmission, gearboxes. High final cost of the finished product. Small radius of flight low energy efficiency in terms of watt*h/kg/km of flight distance. Multi-rotor vehicles: low reliability of ACS. Impossibility of scaling due to practical impossibility to control the jerk and acceleration, angular velocity of the rotor to provide the necessary preemptive action due to the axial moment of inertia. Low wind resistance. Low energy efficiency in recalculation in W*h/kg/km of track.

High requirements for the power source's specific energy content in watt*h/kg, to ensure sufficient flight time and the necessary weight fraction on the target load.

Aerohybrid: this term includes different variations, as well as attempts to combine multi-rotor vehicles, helicopters with airplanes, the scheme has the following disadvantages: reduction of the payload share. Reduction of the range of permissible wind loads. Deterioration of energy efficiency in recalculation on the coefficient watt*h/kg/km. Weak stability in helicopter mode, sometimes it is justified.

Rotorcraft: A type of aircraft in which lift is generated by the main wings, as well as by the vertical projection of the swept area of the rotors. The disadvantages of the scheme should include: the complexity of the design of the aircraft, the emergence of an interferential pattern of flow around the aerodynamic surfaces by the inductive vortex thrown down by the main rotors. The increase in the weight share of the structure, the emergence of aerodynamic moments due to the complex model of the propeller flow in an oblique flow, etc. Reduction of the specific energy efficiency of the scheme relative to the aircraft scheme in watt*h/kg/km.

The above disadvantages lead to mandatory frequent UAV maintenance, requiring a team of specially trained UAV operators to provide flight mission control, pass the checklist, and monitor the integrity and serviceability of the UAV. Also mandatory is finding the most convenient places to operate the UAV, such as for launching and landing. Which is most often limited by geography and terrain. A team of UAV operators has to search for a long time to find a place to take off and land, or risk an expensive vehicle, all of which increases the risk of damage to the UAV, as well as the cost of using unmanned technologies.

All applications require a new type of aircraft that does not have the above disadvantages. The logical option for full automation and elimination of the human factor is the use of a convertoplan UAV. The development of a convertoplan is a labour-intensive process and has a high entry threshold due to the science-intensive nature of the task and the high level of required competencies in different areas, which are key for the successful implementation of the project. All currently known developed convertiplanecraft have the following problems: the complexity of the ACS due to the need for proportional transition mode when rotating the main rotors; high entry threshold due to the science-intensive solution; complex, expensive and unreliable nacelle rotary mechanics systems; the need for a bi-copter swash plate; low overload resistance of circuits; reduced payload share due to the greater weight share of the airframe and rotary mechanics of the motor. Reduced payload share due to the greater weight share of the airframe structure and rotary mechanics of nacelles and other convertiplane assemblies; small range of possible CP movement; small range of possible CP; need to develop own control algorithms of nonlinear adaptive stabilisation systems for each type of vehicle.

For example, it is known from the prior art for a convertiplane containing a fuselage, wings and nacelle propulsion groups placed at the end of each wing, each of which contains a pushing and a pulling propeller and corresponding engines, which differs in that the pushing propellers are designed to be moved to the position of least resistance to airflow when the convertiplane switches to horizontal flight mode and the pushing propeller motor is turned off. (RU 182884 U1 , AEROXO Limited Liability Company, 09.05.2018). The main problems of the convertiplane according to the proposed scheme should include low energy efficiency, low reliability, complexity, aerodynamic interference.

To ensure high energy efficiency in aircraft and helicopter mode, the MPG should be optimised in statics and under the incoming flow corresponding to the full speed range of the aircraft, which in practice is difficult to implement in the conditions of the proposed layout of the convertiplane. This is due to the fact that adding mechanics to any of the engines would require repeating the same technical solution for each of the remaining nacelles. This entails not only complication of mechanics, but also complication of ACS, both in terms of algorithms and in terms of architecture of control electronics - this leads on average to tenfold appreciation of the aircraft and reduction of reliability.

For the proposed utility model the authors of the patent (RU 182884 U1) themselves come to the conclusion of insufficient propeller loading in the plane mode for the given scheme of the convertiplane, emphasising insufficient energy efficiency of the solution in the plane mode of flight. This could have been avoided by using a 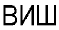 , at least on two nacelles, but due to the complicated flight control scheme due to two main parameters - thrust vector scalars and their values for each of the nacelles, in the absence of classical controls. However, the use of the 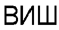 in this case would complicate the already cluttered nacelles design, which would reduce reliability and lead to an increase in construction costs. The authors implemented a compromise solution, increasing the load on the swept surface of a part of the involved MPGs, disconnected half of the propeller groups from operation, and coaxially positioned an additional set of MPGs for the aircraft mode

The low reliability of the convertiplane according to the proposed scheme is due to the need to use rotary mechanics for 4 nacelles and an increased number of rotors, which leads to the installation of a large number of additional electronic components, and the more parts, the higher the probability of system component failure and loss of control over the vehicle. This requires the development of additional redundant electronics and mechanics redundancy systems, as well as the implementation of hardware diagnostics in real time.

Let's consider a convertiplane with transverse arrangement of main rotors, by type "Bell V-22 Osprey", which main disadvantage is complexity in providing transverse balancing during transition mode, caused by a small range of movement of centre of pressure in helicopter mode relative to the centre of gravity. This factor greatly complicates the methods of longitudinal and transverse balancing of the aircraft and, accordingly, requires a complication of the executive mechanics, control algorithms of stabilisation systems, negatively affecting the reliability of the aircraft, as evidenced by the numerous falls

The layout of the convertiplane according to the declared scheme type makes it possible to solve the problem of longitudinal, lateral and directional stability, due to a wide range of values within the framework of the centre of gravity movement relative to the central point, both in the aircraft and helicopter modes. This was made possible by the developed aerodynamic layout and the maximum separation of the propeller group relative to the centre of gravity. Such a condition allows for a safe combination of useful qualities of helicopter- and aircraft-type aircraft, opening up opportunities for safe vertical takeoff and landing, energy efficiency in aircraft and helicopter modes, as well as high wind stability.

Advantages of the converter plane according to the declared scheme over classical aircraft schemes: vertical takeoff and landing; axial manoeuvring; hovering under the set angles of roll and pitch with zero resulting velocity vector; providing control of the aerodynamic angle of attack when hovering in place under the oncoming flow; simple maintenance infrastructure; high stability; fault tolerance and fault-tolerance; less weight of the executive mechanics; a large share of the target load; ease of energy efficiency in the main flight modes: aircraft - at maximum range and duration speeds, transient, and helicopter; ability to plan due to high aerodynamic quality; operation in conditions of high wind load; Possibility to use various power sources; no need in prepared infrastructure for maintenance; possibility of takeoff and landing on surfaces with a slope; low susceptibility to turbulence; high manoeuvrability and controllability; simple algorithms of stabilisation and control in transient mode; possibility of flight in difficult weather conditions.

### The essence of the invention

The problem solved by the claimed invention is the exclusion of: stability problems; complexity of mechanics and control algorithms; unreliability of the system as a whole; aerodynamic, fuel and economic inefficiency, and also adds the possibility of: landing and takeoff from uneven and inclined surfaces, including negative inclination angles on all axes, including swinging and shifting surfaces.

And the addition of key features such as axial manoeuvring, not available for all other aircraft schemes, including the currently existing convertiplanes.

Due to this full automation of the process of launch, landing and execution of flight tasks in any operating conditions is possible, without human-operator participation. While the classical aircraft schemes, on the contrary, require constant human intervention during control and pre-flight and postflight maintenance, which does not allow complete automation for all operating conditions Integration of the developed convertible aircraft followed by full automation of the operation process will not only make it possible to introduce unmanned technologies in all areas of potential application, but also to increase economic efficiency and exclude the notorious human factor. The technical result of the claimed technical solution is: increasing stability and reliability; adding the possibility of axial manoeuvring; improving aerodynamic, fuel and economic efficiency; simplifying mechanics; simplifying complex control algorithms, full automation of flight; landing on rocking surfaces; takeoff and landing on water, uneven surfaces, and surfaces with negative slope on all axes, such as ceilings, steep walls, etc.

The technical result is achieved by having a fuselage, control system, wing aerodynamic arms with aerodynamic control surfaces, front horizontal wing with aerodynamic control surfaces, tail fins, and motor propeller groups , and motor propeller groups are placed with the possibility of turning on the ends of the front horizontal wing and on the tail console, in this case the convertiplane is made with a possibility to provide coincidence of the aerodynamic pressure centre and the resulting thrust vector, as well as with a possibility of their mutual dynamic and static scalar control due to operation of aerodynamic control surfaces and thrust vector control of each of the motor propeller groups, and the motor propeller groups, located on the tip of the front horizontal wings are made with possibility being counter-rotation of the propeller and providing dynamic displacement of the pressure centre, and the propeller groups are made with axial degree of freedom, as well as with the possibility of independent control of each other changing thrust vector, speed and pitch blade angle control.

In the embodiment of the claimed technical solution, the front horizontal wing is designed with a reverse sweep.

In the variant of implementation of the claimed technical solution, the propeller groups are equipped with propeller mechanics with variable pitch angle and diameter.

In the variant of implementation of the claimed technical solution, the aerodynamic control bodies are made in the form of ailerons.

In the embodiment of the claimed technical solution on the ends of the wing consoles are made vertical fins.

In the embodiment of the claimed technical solution, the propeller group located on the tail console is made with the ability to operate the propeller in a pushing mode.

In the variant of implementation of the claimed technical solution is made according to the scheme of the weft or tandem or flying wing scheme.

In variant of realisation of the claimed technical solution, control of angular position of the resulting thrust vector is provided by angular displacement of rotation axis of front nacelles in plane ZX by angular value 'Ω1" in the range from 1 to 45 degrees so that the plane perpendicular to rotation axis of nacelles intersected with OZ axis of related coordinate system, which provides a parallel addition of the MPG thrust vectors, providing the possibility of hovering at specified roll and pitch angles.

Aerodynamic layout (author's name "Colibri")
- plane part: CP control provides L/D ratio in a wide range of speeds; anti stall characteristics; preservation of controllability in critical modes due to the resulting thrust vector control; aerodynamic stability control; low susceptibility to turbulence due to the aerodynamic layout;
- helicopter part: wide area of resulting thrust vector movement; simplification of electric motor control, solution of synchronisation failure problem; scalar value control of resulting thrust vector; possibility of hovering at different roll and pitch angles without movement.

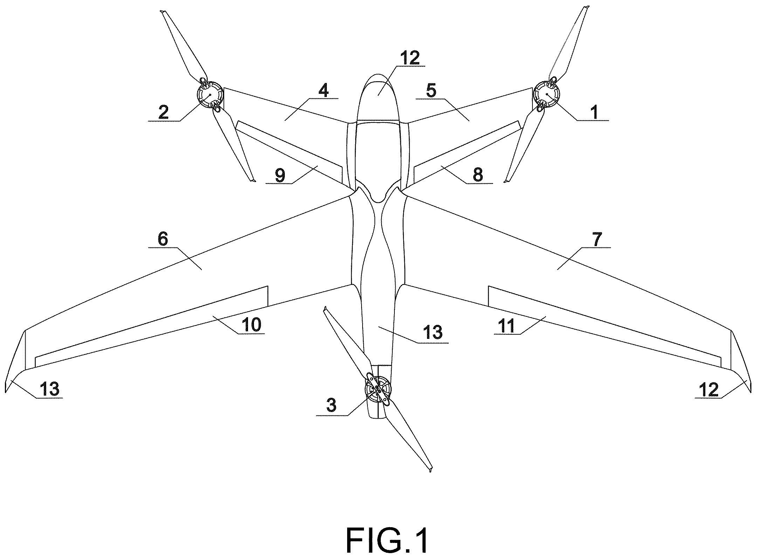

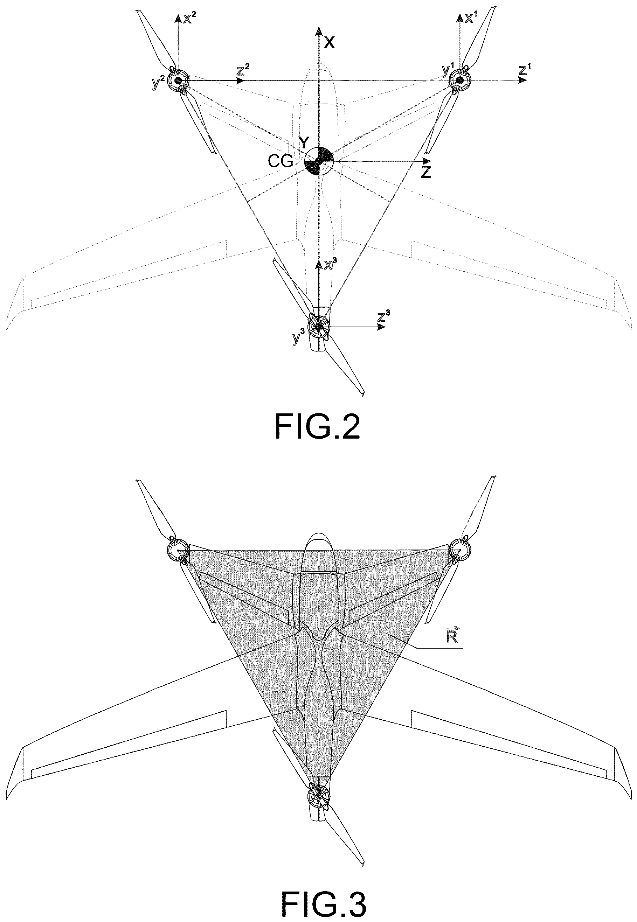

Control of static and dynamic stability of the convertiplane:
Area of thrust vector displacement, shown in (Fig. 1) provides the most efficient control scheme of the aircraft due to the wide area of movement relative to the given CG of the aircraft in (Fig. 2);
Vector thrust control by VPP and VDP of each MPG, with efficiency control by changing the angular speed of the rotor through changing its diameter.

Possibility of aerodynamic control when the MPG is switched off, due to the layout of aerodynamic controls.

The high energy efficiency is due to:
High aerodynamic quality of the aircraft, provided by the uniqueness of the stated aerodynamic layout, which can not be classified unambiguously either as a tandem, or "canard" or "flying wing", so it is necessary to introduce a new classification for the aerodynamic scheme developed by the authors and call it "Colibri";
- Wind compensation with increased energy efficiency in the hover mode when the course vector of the incoming flow is preempted, with the provision of aerodynamic unloading by the wings of the motor propeller groups;
- Changing the angle of attack of the blades for different flight modes, implementation of thrust vector magnitude control of a separate MPG, MPG energy efficiency adjustment by a set of parameters, linking the thrust vector magnitude changes to the control;
- By changing the propeller diameter of each MPG for each of the flight modes;
- Adjustment of propeller group efficiency parameters by weight load on the swept surface, adjustment of thrust vector control efficiency, dynamic load control by swept surface;
- A wide zone of CP movement, through the distribution of the specific load on the main area of the wings by the aerodynamic controls, which provides dynamic adjustment of the stability of the aircraft in different flight modes, due to changes in the distance between the CG and CP, providing the maximum L/D-ratio to adjust to the current mode of flight;
- Decomposition of scalars of the resulting thrust vector into axial components in the projection on the referenced coordinate system, provides the possibility of axial movements of the vehicle without changing the roll and pitch angles

### Brief description of the drawings.

The details, features, and benefits of the present invention follow from the following description of embodiments of the claimed technical solution using the drawings that show:
Fig.1 - description of the aerodynamic layout of the convertiplane (top view);
Fig.2 - arrangement of the rotor engine groups and binding of the propeller group relative to CG;
Fig.3 - displacement area of the resulting thrust vector;
Fig.4 - angles of thrust vector control of the propeller group;
Fig.5 - range of displacement of the rotary axis and the rotary nacelle of the propeller group 1, 2;
Fig.6 - scheme of application of forces and moments in the steady state helicopter mode;
Fig.7 - scheme of forces application in the fixed-wing aircraft mode;
Fig.8 - scheme of addition of forces resulting thrust vector in front projection in transverse movement without roll.
Fig.9 - scheme of addition of forces of the resultant thrust vector in the top projection for lateral movement without roll.
Fig. 10 is a scheme of adding the forces of the resulting thrust vector in the front projection at a static hover at a given roll angle;
Fig.11 - scheme of summation of the resulting thrust vector forces at a static hover at a given roll angle;
Fig.12. Scheme of application of forces in hybrid flight mode;
Fig.13. Force and moment application diagram for directional control;

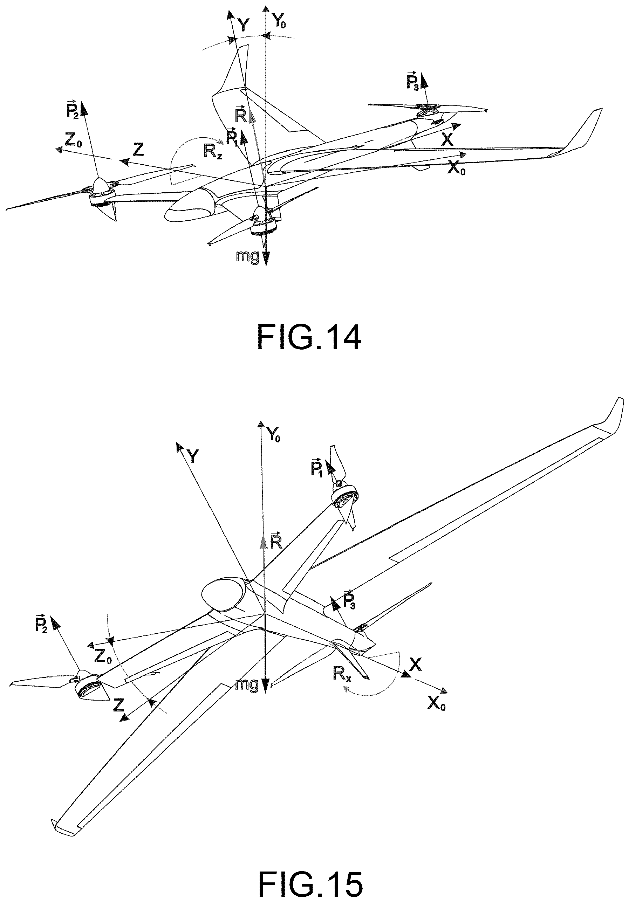

Fig. 14 - diagram of application of forces and moments during pitch control;
Fig.15 - diagram of application of forces and moments during roll control.

The figures show the following positions:
1 - front right motor propeller group; 2 - front left motor propeller group; 3 - tail console motor propeller group; 4 - front horizontal wing; 5 - front horizontal wing; 6 - left main wing console; 7 - right main wing console; 8 - aerodynamic control surface; 10 - aerodynamic control surface; 11 - aerodynamic control surface; 12 - replaceable payload module; 13 - fuselage; 14 - vertical fin; 15 - vertical fin; 16 - point of intersection.

### Terms, definitions used in the description:

MPG - motor propeller group; GCS - (geostationary coordinate system) O0X0Y0Z0, right-handed Cartesian coordinate system, whose axes and its origin are fixed relative to the ground, and are chosen according to the task; FHW - front horizontal wing; ACS - (associated coordinate system) OXYZ, movable coordinate system, the axes of which are fixed relative to the aircraft: OX - longitudinal, OY - normal, OZ - transverse; CS - coordinate system; Angle of attack α - the angle between the longitudinal axis of the vehicle and the projection of the velocity vector on the plane OXY ACS;
angle between the transverse axis OZ of the vehicle and the O0Z0 axis of the geostationary coordinate system; Pitch angle - Angle between the longitudinal axis OX and the horizontal plane OX0Z0 of the GCS;
Yaw angle ψ - Angle between the axis OX0 of the GCS and the projection of the longitudinal axis OX on the horizontal plane OX0Z0 of the GCS;
CP - the centre of pressure, the point of application of the increment, the resultant of aerodynamic forces;
CG - centre of gravity, the point of application of the force of gravity;
AF - aerodynamic focus, the point of application of the lift force increment;
ACS - Automatic control system; VPP - variable pitch propeller; VDP - variable diameter propeller; MPG - engine propeller group;
X1Y1Z1 - associated CS MPG(1); P1 - scalar value of the MPG thrust vector (1); P2 - scalar value of the MPG thrust vector (2); P3 - scalar value of the MPG thrust vector (3); px - projection of the scalar vector onto the axis OX of the ACS; py - projection of the scalar vector onto the OY axis of the ACS; pz - projection of the scalar vector onto the OZ axis of the ACS; S1 - axis of rotation of the engine nacelle with a fixed MPG (1); S2 - axis of rotation of the engine nacelle with a fixed MPG (2); S3 - axis of rotation of the engine nacelle with a fixed MPG (3); S4 - 2 axis of rotation of the engine nacelle with fixed MPG3; O1 - normal thrust axis in helicopter mode for MPG(1); O2 - normal thrust axis in helicopter mode for MPG(2); O3 - normal thrust axis in helicopter.

### Disclosure of Invention.

Description of the converter glider according to the declared aerodynamic scheme.

As the most efficient, convenient in operation and layout of airborne systems and units was originally selected layout on the aerodynamic scheme "canard", but this aerodynamic layout did not fully meet the requirements laid down.

Then we made the next modification, but it was no longer a "canard", because it could not have a main front wing, which was used in the next modification of our aerodynamic layout. Therefore, the following aerodynamic layout was chosen as the "tandem" aerodynamic layout, which also did not fully meet the required parameters, because the "tandem" has too small area of the front wing.

As a result, in addition to our use of classical modifications of tandem, canard and flying wing aerodynamic layouts, we developed a new unique aerodynamic layout, which combines the characteristics of all the above mentioned aerodynamic layouts, but at the same time is not any of them. So a new aerodynamic layout was created, which was called "Colibri".

The chosen scheme provides relative simplicity of transverse and longitudinal balancing, has the necessary stability on all axes, and allows control in a larger range of pressure centre movement than in classical schemes, while being safer due to the inability to assume critical modes, leading to flow stoppages and loss of controllability - as it happens in classical schemes.

In this case, in the variant of implementation of the claimed technical solution, the convertiplane can also be made according to the "tandem" or "flying wing" scheme, depending on the required flight and technical and operational characteristics.

The glider is made according to the scheme with two front wing swept aerodynamic consoles (6, 7) with narrowing and the necessary extension set of profiles to ensure elliptical distribution of lift. Along the trailing edge of the front horizontal wing (4, 5) and along the rear edges of the main wing consoles, there are aerodynamic surfaces control (9, 8) and respectively (10, 11), operating in differential control mode.

In the fuselage nose (13) is located an easily removable payload (12), such a layout allows for the greatest range of angles for visual observation from the side.

On the ends of the wing panels (6, 7) is a vertical fin (14, 15), reducing the sum of the aerodynamic drag and increasing directional stability.

To provide a larger centre of gravity range, while maintaining energy efficiency, the main rotary front horizontal inverted sweep wing with a carefully designed set of aerodynamic profiles to ensure operation in the interferential pattern of oblique flow from the front VMHs (numbers 1 and 2) has been developed.

To simplify the mechanics, the FHW (4, 5) is fixed stationary at the angle of greatest aerodynamic quality (ADQ), which provides the established flight mode with a given alignment, on the trailing edge of the FHW (4, 5) there are aerodynamic control surfaces (9, 8), working in differential mode. Aerodynamic control surfaces (8, 9, 10, 11) are designed as ailerons operating in differential mode, which ensures control of the aircraft, as well as energy efficiency modes due to longitudinal control of the CP movement.

The combination of the above solutions made it possible to shift the critical regimes of streamline stall beyond the operational range of permissible aerodynamic angles of attack of the aircraft, the stall of the flow from the FHW (4, 5) in non-critical regimes leads to movement of the CP to the tail side from the CG causing a dive moment, leading to a gain of the aircraft speed contributing to a return to the range of operational ranges of the angle of attack. Thus we get a stable aircraft scheme, with high ADQ and a wide range of permissible speeds with preservation of controllability in critical flight modes.

The layout of the claimed convertible glider has three electric marching motors, with VPP and VDP located on them, which are located on the rotary nacelles providing angular deflection relative to the normal thrust vector axis, implementing full-fledged control of the thrust vector itself. At the same time, two propulsion groups (1, 2) are located on the ends of the front horizontal wing (5 and 4 respectively) and propulsion group (3) located at the tail end of the fuselage (13).

The thrust vector control tricopter scheme is the most efficient in terms of power, easy to balance laterally and longitudinally, stable and reliable.

Synchronisation of the MPG operation (1, 2, 3) by ACS provides control of the resulting thrust vector, forming a wide area of thrust vector movement, enclosed in a triangle, the vertices of which are the propeller motor groups.

The rotor groups are made with their own actuator mechanism, providing independent of each other change of their own thrust vector, providing independent control of each of the rotors by ACS on the following parameters: rotor group speeds; axial thrust vector control; blade installation angle control; load control on the swept surface of the rotor by VDP.

The distance between the propeller groups, their weight and position are calculated and selected so as to preserve the axial moments of inertia of the aerodynamic scheme without generating resonance phenomena and without aggravating the interferential pattern of the glider flow by throwing streams from the propeller groups in the aggregate leading to destabilisation of the aircraft on the main modes of flight.

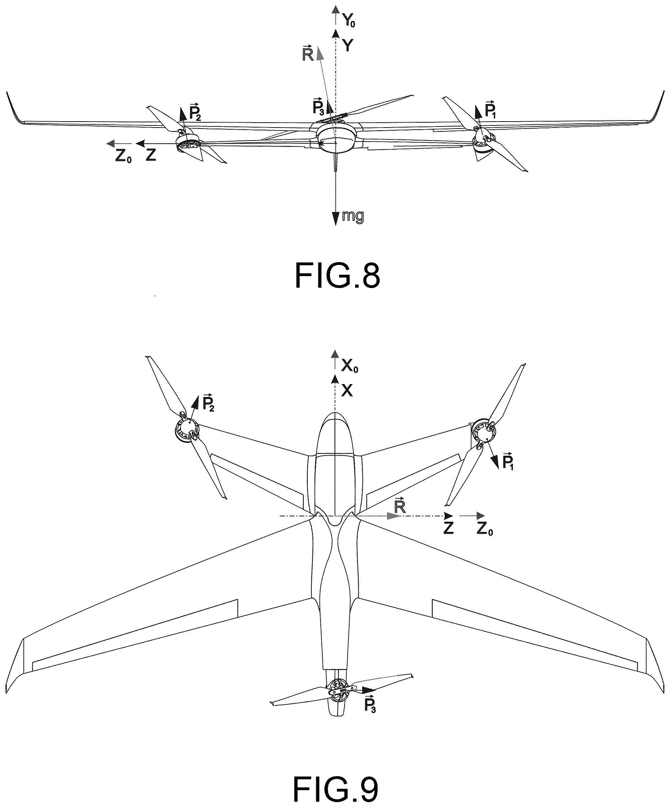

Wide range of resulting thrust vector displacement provides high stability of the convertiplane aerodynamic scheme in helicopter and hybrid flight modes, and control of angular component of resulting thrust vector relative to normal thrust vector provides high controllability and opens new possibilities for controlling roll and pitch of the vehicle in flight, with zero velocity vectors, i.e. in one place without axial displacement. (Figs. 8, 9) The propeller blades (1, 2, 3) have aerodynamic overbalancing in the form of variable pitch and propeller diameter, such a solution allows to overbalance the propeller blades and to implement algorithms of energy efficiency adaptation in different flight modes.

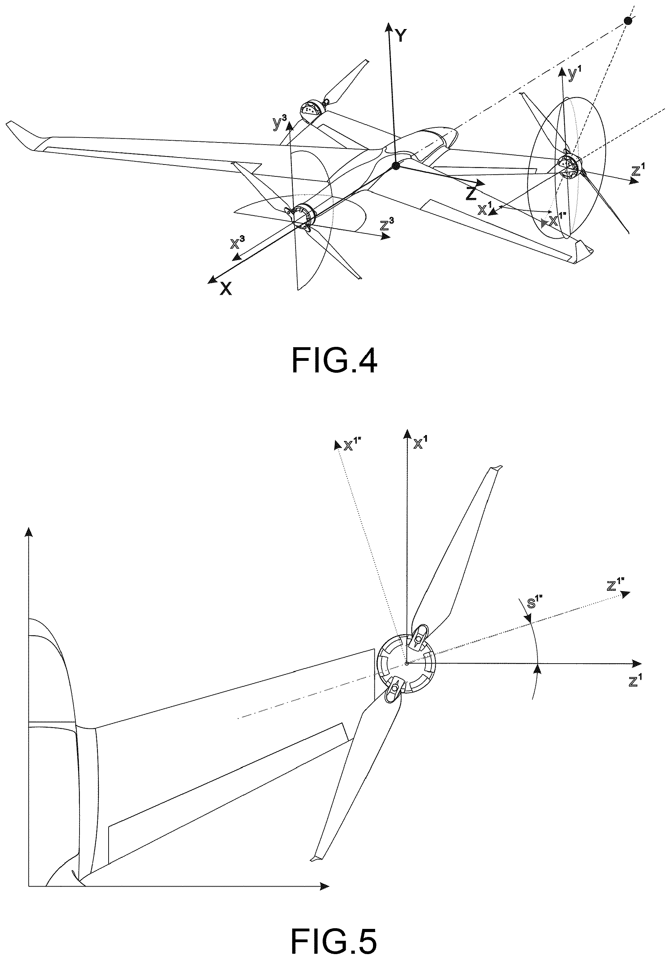

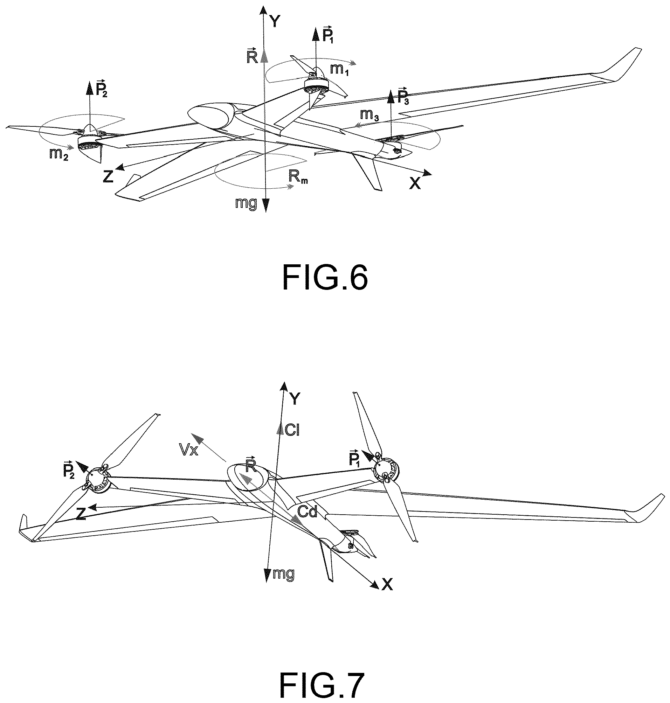

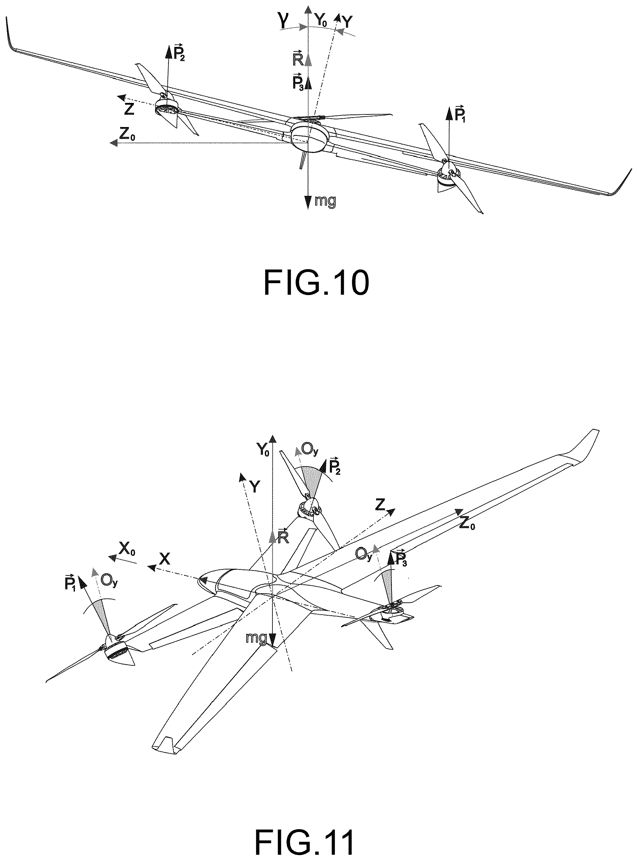

The axial degrees of freedom of the motor propeller groups, displacement of the axes of rotation of the MPG (1 and 2) on the angular value S1 within 1 to 45 degrees on both ways in the plane ZX is made so that the plane of rotation of the MPG 1 and 2 crosses in the point illustrated in (Fig. 4,6), provide possibility of parallel addition of thrust vectors under the given angular position of resulting thrust vector and also independent control of thrust vector value, angular position relative to normal axis of thrust vector Fig. 9 designation y, at scalar addition of vectors, and their calculated angular position, as well as the required value, the ACS provides control of the resulting thrust vector providing the following possibilities:
- change of thrust vector angle around longitudinal and transverse axis of the aircraft, providing controllable angular change of resulting thrust vector opens up manoeuvring possibilities without changing roll and pitch angles (Fig. 8, 9);
- hovering in place at the required roll and pitch angle (Fig. 10, 11), performing a landing on a surface that is at an angle to the horizon or changing its angle in dynamics, including such a control scheme is most suitable for landing on the swinging deck of a ship, or to provide compensation for wind and turbulence acting on the aircraft without influence by classical methods of manoeuvring roll and pitch.

The wide area of thrust vector movement shown in (Fig. 3) provides high manoeuvrability and controllability of the convertiplane, the resulting thrust vector can have a position coinciding with the centre of mass, in this case neutral stability contributing to controllability in hybrid mode is provided, the CG can have a position slightly behind the CP in this case aerodynamic stability occurs, if conditions of aircraft static and dynamic stability are met, aerodynamic stability contributes to energy efficiency of flight in re Dynamic change of the CP in the hybrid mode is provided by unloading the aerodynamic surfaces by the rotors and vice versa by unloading the rotors by the wings.

Thus we obtain a layout of the converter glider according to the declared scheme, which is the most controllable of all currently existing schemes and provides the greatest stability under the simplest stabilisation algorithms, while in the manoeuvring mode provides the greatest efficiency, and ease of ensuring stability under the influence of external factors. For clarity, let us give some variants of scalar addition of thrust vectors.

The case of controlled movement along the transverse axis of the convertiplane with fixed horizon, GCS and ACS axes coincide, roll, pitch and yaw angles are zero, angular deviation and value of vectors P1, P2 and P3 provide zero resulting moment and transverse component whose projection lies on OZ axis which drives the vehicle along the convertiplane transverse axis (Fig. 9).

Case with providing angular deviation by roll with subsequent hovering in place at target angle. The value of thrust vectors P1 P2 P3 leads to change of roll (Fig.11), independent angular deviation of each of the thrust vectors by values a, b, c leads to compensation of the resulting moment, and the resulting thrust vector is collinear to the normal axis of geostationary coordinate system and compensates gravity force acting on the convertiplane, such condition provides equilibrium state of the convertiplane with the given roll angle with zero resultant speed vector.

### Flight modes of the claimed convertiplane:

Helicopter: the weight of the aircraft is compensated by the lifting force of three rotors (Fig. 6) (forces P1, P2, P3) developing in the aggregate an equilibrium force, which provides compensation of the weight of the aircraft. Two front rotors (1, 2) have counter rotation, the direction of rotation is caused by an additional increase in the velocity gradient on the wing surface, thus the right front engine (1) rotates counterclockwise, the left front engine (2) rotates clockwise.

The direction of rotation of the tail rotor (3) can be both clockwise and counterclockwise. Stability is provided by the dynamic displacement of the centre of pressure, the differential thrust of the rotors (the area of CG movement is shown in Fig. 3).

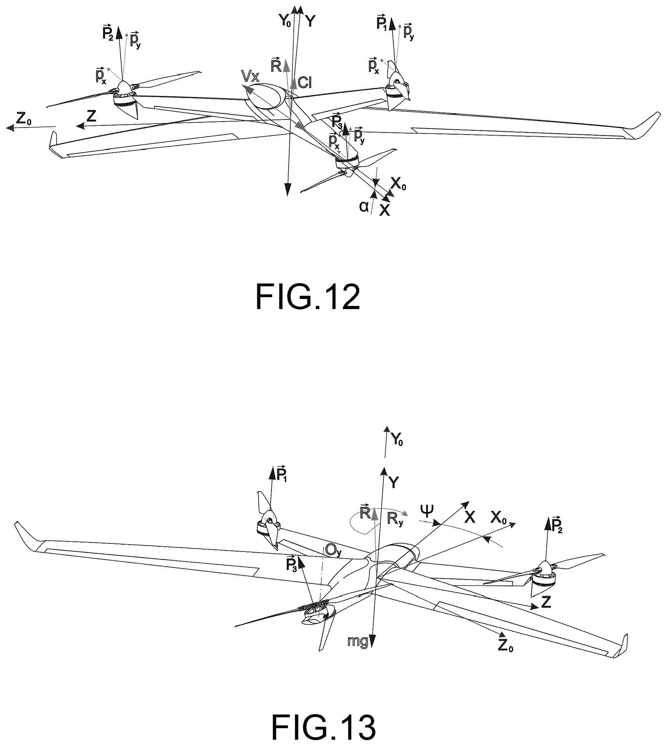

Transitional "hybrid": When the horizontal velocity component Vx increases, due to the rotor lifting force component Fx, the occurrence of which is due to the rotation of the engines around the transverse axis of the vehicle, aerodynamic forces act on the surface of the convertible, the resultant force is decomposed into the lifting force Fl and drag force Fd for ease of perception, with an increase in the velocity component Vx there is an increase in aerodynamic forces, contributing to the compensation of the MG force (own weight of the convertiplane), with the drag force Fd being a multiple of the aerodynamic quality of the vehicle less than the MG force, which allows a complete transition to the aircraft mode using wings as aerodynamic support, or conversely a smooth deceleration with transition to the helicopter mode. The transition mode itself can be used as the main flight mode, due to the relatively greater movement of the CG it is easier to ensure controllability of the convertiplane, which allows it to fly in conditions of increased wind load, turbulence or when it is necessary to move with high manoeuvrability. The transition process is carried out by longitudinal tilting of the tail rotor, the two front rotors, or all rotors simultaneously or separately. When performing the transition mode, by longitudinal rotation of the tail rotor, its initial position must be from below (Fig. 12).

Aircraft: The condition of "steady-state flight" at target velocity Vx is met: in equilibrium of the sum of aerodynamic forces Fd by resulting thrust vector R formed by components of forces F1 and F2, and also mg by lifting force Fl created by main wing consoles (6, 7) and FHW (4, 5) which completely compensate the weight of the aircraft MG, and a longitudinal vector of thrust of engines being a sum of forces F1 and F2 (provided by longitudinal tilt around transverse axis of the vehicle) compensating aerodynamic drag Fd at a speed providing the highest efficiency Vx. Control in this mode is provided by aerodynamic control surfaces (8, 9, 10, 11), as well as thrust vectors (Fig. 7).

In the variant of realisation of the claimed technical solution it is possible to use a tail mechanism having two degrees of freedom so that to provide simultaneously directional control and to decompose the thrust vector scalar on a longitudinal component, at the location of the motor from below nacelle of the device, and propeller work in pushing mode, it is possible to use a tail rotor simultaneously in plane and in helicopter modes.

Such a need may arise if it is necessary to increase the specific power capacity in plane mode, for example, to provide high-altitude flights, or to improve positioning accuracy when hovering at different angles.

### Ensuring sustainability

Helicopter mode:
Roll: when an angular error occurs relative to the horizon, the ACS provides a preemptive roll action resulting in an increase in lifting force P1 and a decrease in lifting force P2, MPG 1 and 2 respectively, resulting in a preemptive My moment leading the convertiplanecraft back to an equilibrium mode.

Pitch: when an angular error occurs relative to the horizon, the ACS provides a preemptive pitch action resulting in an increase in lifting force P1, P2 and a decrease in lifting force P3, MPG (1, 2 and 3 respectively), resulting in a preemptive moment Mx which brings the converter aircraft back to the equilibrium mode.

Yaw: in case of an angular error relative to the course, the ACS provides a preemptive action by tilting the actuators of the rotary nacelles by the angular value necessary to compensate the angular error, resulting in a preemptive moment Mz that drives the converter to the required azimuth position, returning it to the set course.

Stability: the aerodynamic layout of the aircraft is designed so that when an external impact on the aircraft, in the settled mode, resulting in angular deviation along the longitudinal axis, there is a violation of the equilibrium system of forces, and under the influence of the resulting aerodynamic moments created by aerodynamic controls, there is a preemptive impact. Transition mode: a set of processes of mechanical and aerodynamic influence on the aircraft under the condition of fulfilment of which the transition from the helicopter mode to the aircraft mode and vice versa takes place, consider the main stages of the transition mode:
Initial phase - hybrid mode: at the initial stage of the transition mode, to ensure that the resulting thrust vector coincides with the longitudinal axis of the convertiplane, the rotors perform a longitudinal tilt, spreading out the thrust vector so as to ensure the balance of gravity and lift forces, but in this case there is an additional thrust vector contributing to the speed gain of the aircraft since there is an oncoming flow on the wing and an aerodynamic component, which in turn creates a transverse moment causing the convertiplane to pitch, at this moment the rotors are already in the "aircraft" position and the convertiplane starts to fly in plane mode.

Stability in this mode is ensured by the differential thrust of the rotors that provide lifting force, compensating in antiphase the moments of external forces and inertia of the vehicle, thus preempting the destabilising forces that generate the moment that throws the system out of equilibrium. Such a mode is advantageous when providing controllability at low speeds, in critical modes for aerodynamic surfaces, while the surfaces themselves provide lift, but cannot collapse. This solution provides safe control of the convertiplane in transient modes.

The final phase is aerodynamic control: as there is an incoming flow on the wing there is an aerodynamic component, which in turn creates a transverse moment causing the convertiplane to pitch in this moment, the rotors are already in the "plane" position and the convertiplane starts to fly in the plane mode. In the final stage, at full provision of lifting force by aerodynamic surfaces, full transition to aerodynamic controls is performed, in this mode the aircraft has the highest energy efficiency, and the propeller group works in the energy efficient mode reporting the necessary force to maintain the established mode of flight.

## Claims

1. Convertiplane containing fuselage, control system, main wing with aerodynamic control surfaces, front horizontal wing with aerodynamic control surfaces, tail fins, and motor propeller groups,
propeller groups with propellers are located with possibility to rotate on ends of front horizontal wing and on tail console,
at that the convertiplane is made with ability to provide coincidence of aerodynamic pressure centre and resulting thrust vector and also with the possibility of their mutual dynamic and static scalar control due to operation of aerodynamic control surfaces and thrust vector control of each of the motor propeller groups, and the motor propeller groups, located on the leading horizontal front wings, are designed with counter-rotation of the propeller and with the possibility of providing dynamic shift of the pressure centre,
the propeller groups are designed with axial degree of freedom and with the possibility of independent control of each other to change thrust vector, speed and blade pitch control

2. The converiplane according to clause 1, **characterised in that** the front horizontal tail is designed with a reverse sweep.

3. The converiplane according to clause 1, **characterised in that** the propeller groups are equipped with mechanics of the propeller with variable pitch and diameter.

4. The converiplane according to clause 1, **characterised in that** the aerodynamic controls are in the form of ailerons.

5. The converiplane according to clause 1, **characterised in that** on the wingtips of the wing consoles there is a vertical fin.

6. The converiplane according to clause 1 , **characterised in that** the propulsion group located on the tail is designed with the ability to operate the propeller in a pushing mode.

7. The converiplane according to clause 1, **characterised in that** it is designed according to the weft or tandem or flying wing scheme, or according to its own colibri scheme.

8. The converiplane according to item 1, **characterised in that** the resulting thrust vector is controlled by shifting the axis of rotation of the front nacelles in the plane ZX by an angular value S1 between 1 and 45 degrees on both ways, so that the plane of rotation of the nacelle intersected with the axis Z of the ACS at the point marked on (Fig. 5), which provides a parallel addition of the thrust vectors of the MPG at roll and pitch angles.

9. The converiplane according to claim 1, **characterised in that** the displacement area of the resulting thrust vector is enclosed in a triangular area formed by the position of the propeller motor groups.
